# EUROPÄISCHE PATENTSCHRIFT

(11) **EP 1 681 221 B1**
(45) Veröffentlichungstag und Bekanntmachung des Hinweises auf die Patenterteilung: **19.11.2008**
(21) Anmeldenummer: 05026332.6
(22) Anmeldetag: 02.12.2005
(51) Int. Cl.: F16H 61/12, B60W 50/02

(54) **Verfahren zum Feststellen von Fehlfunktionen von Komponenten eines Kraftfahrzeugantriebstranges**
Method for detection of malfunction from parts of the drive line of an automotive vehicle
Méthode de détection de défaillance des composants d'une chaîne d'entraînement d'un véhicule automobile

(30) Priorität: 13.01.2005 DE 102005001524
(43) Veröffentlichungstag der Anmeldung: 19.07.2006
(73) Patentinhaber: ZF Friedrichshafen AG, 88038 Friedrichshafen (DE)
(72) Erfinder: Petzold, Rainer, 88045 Friedrichshafen (DE); Jäger, Thomas, 88074 Meckenbeuren (DE); Wolfgang, Werner, 88213 Ravensburg (DE); Steinborn, Mario, 88046 Friedrichshafen (DE); Kramer, Rupert, 88048 Friedrichshafen (DE); Bitzer, Franz, Dr., 88048 Friedrichshafen (DE)

(56) Entgegenhaltungen:
- EP-A- 1 177 927
- GB-A- 2 370 867
- US-A- 4 671 235
- US-A- 5 928 110
- US-A1- 2003 109 346
- US-A1- 2004 034 460
- US-B1- 6 490 511

## Beschreibung

Die Erfindung betrifft ein Verfahren zum Feststellen von Fehlfunktionen von Komponenten eines Kraftfahrzeugantriebstranges sowie zur Reaktion auf dieselben gemäß dem Oberbegriff des Patentanspruchs 1.

Bekanntermaßen wird für viele Steuerungs- und Regelungsfunktionen in einem Kraftfahrzeug der Wert des aktuellen Motordrehmomentes benötigt. Dieser aktuelle Motordrehmomentwert wird herkömmlich im Motorsteuerungsgerät auf der Grundlage von fahrzeugspezifischen sowie fahrsituationsaktuellen Werten berechnet und beispielsweise über elektronische Schnittstellen (CAN-Bus) anderen Steuerungsgeräten des Fahrzeugs zur Verfügung gestellt. Zu diesen Steuergeräten gehört auch ein Getriebesteuergerät, welches auf der Grundlage von abgespeicherten Steuerungs- und/oder Regelungsprogrammen Aktuatoren in einem Automatgetriebe ansteuert, mit denen die Betätigung einer Schalt- und Anfahrkupplung und/oder Stellglieder im Automatgetriebe zur Durchführung von Übersetzungsänderungsvorgängen ansteuerbar sind.

Der von dem Motorsteuergerät üblicherweise aus der Motordrehzahl, der Kraftstoffeinspritzmenge und anderer Parameter berechnete Motordrehmomentwert ist zumindest für die Steuerung und Regelung eines Automatgetriebes zu ungenau. So kann der berechnete Motordrehmomentwert von dem tatsächlichen Motordrehmomentwert aufgrund von Einflüssen, beispielsweise durch einen motorseitigen Nebenaggregateantrieb, wegen Lüfterverlusten, wegen dynamischer Effekte, wegen unterschiedlicher Ladedrücke der Brennkraftmaschine und/oder wegen unterschiedlicher Umgebungsluftdrücke mehr oder minder stark abweichen. Zu den dynamischen Effekten gehören Drehmomentsteigerungen, wenn beispielsweise aufgrund von einem erhöhten Fahrwiderstand die Motordrehzahl abnimmt und alle drehenden Teile des Antriebsstranges mit ihren nachlaufenden Drehmassen drehmomenterhöhend wirken, oder Drehmomentverringerungen, wenn bei steigender Motordrehzahl die trägen Drehmassen des Antriebsstranges im Sinne eines Aufzugseffektes erst auf diejenige Drehzahl gebracht werden, die schon der Antriebsmotor selbst aufweist.

Insbesondere bei Fahrzeugen mit einem Automatgetriebe und einem diesem antriebstechnisch vorgeschalteten hydrodynamischen Drehmomentwandler entspricht ein berechneter Motordrehmomentwert wegen der Wandlerkennlinie des Drehmomentwandlers nicht dem tatsächlich an der Getriebeeingangswelle anliegenden Drehmoment. Dies hat zur Folge, dass auch die autonomen Übersetzungsänderungsvorgänge des Getriebes nicht so optimal wie beim Vorliegen eines gemessenen Drehmomentwertes durchgeführt werden können.

Zudem kann es während des Betriebs eines Kraftfahrzeuges zu einer Kraftstoffunterbrechung der Brennkraftmaschine kommen. Sofern das Motordrehmoment berechnet wird, bleibt diese Fehlfunktion bei der Bestimmung des Motordrehmoments bisher unberücksichtigt. Das Motorsteuergerät gibt daher an das Getriebesteuergerät sowie an andere Fahrzeugsteuergeräte einen falsch berechneten Motordrehmomentwert ab. Wenn das Fahrzeug nun eine Steigung befährt, erkennt das Getriebesteuerungsgerät diese Steigung, weil das Fahrzeug trotz vorgeblich hohem Motordrehmoment langsamer wird.

Diese Situation wird von dem Getriebesteuergerät üblicherweise zur Einleitung eines Rückschaltvorgangs genutzt, so dass eine diesbezügliche Kupplung geöffnet und der aktuelle Gang ausgeschaltet wird. Ein Synchronisieren des neuen Gangs durch Anheben der Motordrehzahl ist aber wegen des Fehlens des Kraftstoffs nicht mehr möglich. Der Antriebsstrang zwischen dem Antriebsmotor und dem Getriebe ist nun offen und der Motor bleibt schließlich stehen. Eine von dem Antriebsmotor angetriebene Lenkhilfepumpe wird dadurch funktionslos, so dass dem Fahrer unvorteilhaft hohe Lenkkräfte abverlangt werden.

Im Zusammenhang mit der genannten Ungenauigkeit des berechneten Motormomentwertes wird auf die DE 102 57 139 A1 hingewiesen. In dieser Druckschrift wird eingangs erläutert, dass bei Automatikgetrieben in Kraftfahrzeugen zum Steuern des genauen Hoch- bzw. Runterschaltens das Getriebeeingangsdrehmoment, der Wert der Drosselklappenöffnung an der Brennkraftmaschine sowie die Fahrzeuggeschwindigkeit häufig als Eingangsgrößen genutzt werden. Dabei werden insbesondere bei elektronisch gesteuerten Getrieben die Getriebeeingangsdrehmomente auf der Grundlage der Motordrehzahl geschätzt. Diese Schätzungen seien ungenau, so dass üblicherweise Drehmomentsensoren an der Getriebeeingangswelle zur genauen Erfassung des Getriebeeingangsdrehmoments genutzt werden.

Außerdem ist aus der DE 195 13 695 A1 eine Regelungsvorrichtung für die Überbrückungskupplung des Wandlers eines Automatgetriebes bekannt. Zur Erhöhung der Lebensdauer der Überbrückungskupplung und des Wandleröls sowie zur Verringerung der thermischen Verlustleistung der Überbrückungskupplung ist die Kupplungsregelvorrichtung mit Mitteln zur Bestimmung von Sollschlupfwerten ausgestattet, mit denen im Dauerschlupfbetrieb der Überbrückungskupplung die Schlupfdrehzahl in Abhängigkeit von der Drehzahl des Eingangselementes der Kupplung, dem Motordrehmoment und der Fahrpedalaktivität einstellbar ist.

Zudem ist es bei dieser Regelungsvorrichtung vorgesehen, dass an der Kurbelwelle des Fahrzeugantriebsmotors bzw. an der Pumpenseite des Drehmomentwandlers und nicht etwa an der Getriebeeingangswelle ein Drehmomentsensor das dort anliegende Drehmoment misst und der Regelungseinrichtung zur Verfügung stellt. Außerdem ist in dieser Druckschrift offenbart, dass mit der Regeleinrichtung eine Notfallbetriebsart für die Wandlerüberbrückungskupplung möglich ist. Während dieser Notfallbetriebsart wird der Sollschlupfwert auf einen Minimalwert gesetzt, wenn durch eine Störung der Wandlerüberbrückungskupplung oder des Drehmomentwandlers die Wandleröltemperatur einen unzulässig hohen Wert überschritten hat.

US-A1-4 671 235, als nächstliegender Stand der Technik betrachtet, zeigt ein Verfahren zum Feststellen von Fehlfunktionen von Komponenten eines Kraftfahrzeugantriebstranges sowie zur Reaktion auf dieselben, wobei der Antriebsstrang einen Antriebsmotor und ein Automatgetriebe mit jeweils zugeordneten Steuergeräten, Stellmitteln und Sensoren aufweist, und während eines Fahrzeugbetriebs die Funktionen der Steuergeräte, der Bedienelemente, der Sensoren und deren Datenübertragungsmittel erfasst und auf Fehlfunktionsanzeichen überprüft werden und beim Auftreten einer Fehlfunktion eine Notbetriebsart aktiviert wird.

Vor diesem Hintergrund liegt der Erfindung die Aufgabe zugrunde, ein Verfahren zum Feststellen von Fehlfunktionen von Komponenten eines Kraftfahrzeugantriebstranges sowie zur Reaktion auf dieselben vorzustellen, mit dem Störfälle an Antriebsstrangkomponenten, deren Steuergeräte, Sensoren und/oder Signalübertragungsmittel erkannt werden, und mit dem ein Notbetrieb des Fahrzeugs eingeleitet und durchgeführt werden kann.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Demnach geht die Erfindung aus von einem Verfahren zum Feststellen von Fehlfunktionen von Komponenten eines Kraftfahrzeugantriebstranges sowie zur Reaktion auf dieselben, wobei der Antriebsstrang einen Antriebsmotor und ein Automatgetriebe mit jeweils zugeordneten Steuergeräten, Stellmitteln und Sensoren aufweist, und bei dem der Getriebeeingangswelle ein Drehmomentsensor zur Erfassung des Getriebeeingangsdrehmomentes zugeordnet ist.

Zur Lösung der gestellten Aufgabe ist zudem vorgesehen, dass während des Fahrzeugbetriebs die Funktionen der Steuergeräte, der Bedienelemente, der Sensoren und deren Datenübertragungsmitteln sowie die Messwerte des Getriebeeingangsdrehmoments erfasst und auf Fehlfunktionsanzeichen überprüft werden, und dass nach dem Erkennen einer solchen Fehlfunktion Verfahrensschritte durchgeführt werden, mittels denen das Fahrzeug in einer Notbetriebsart sicher weiter betreibbar ist oder mit deren Hilfe der Fahrbetrieb sicher beendet werden kann.

Durch diese Betriebsweise lassen sich im wesentlichen durch die Erfassung und Auswertung der Messwerte eines Drehmomentsensors an der Getriebeeingangswelle eines Automatgetriebes Fehlfunktionen sicher erkennen und Gegenmaßnahmen einleiten, die einen sicheren Fahrzeugnotbetrieb ermöglichen. Eine derartig sichere Fehlfunktionserkennung ist durch eine Auswertung eines aus anderen Fahrzeug- und Fahrsituationskenngrößen berechneten Motordrehmomentwertes nicht möglich, da dieser aufgrund der vielen Einflussgrößen üblicherweise fehlerbehaftet ist.

Insbesondere in Fahrzeugen, in denen der Motordrehmomentwert bzw. das Getriebeeingangsdrehmoment eine wichtige Basisgröße für die Steuerung und Regelung anderer Antriebsstrangkomponenten ist, kommt der genauen Messung dieses Drehmomentes eine große Bedeutung zu. So kann die Nutzung eines fehlerhaften Motordrehmomentwertes bei der Kupplungs- und/oder Getriebesteuerung zu unkomfortablen und verschleißintensiven Schaltvorgängen führen. Durch die Nutzung eines Drehmomentsensors an der Getriebeeingangswelle werden genaue Drehmomentwerte zur Verfügung gestellt, auf deren Grundlage beispielsweise Fehler am Antriebsmotor selbst oder auch in dessen Steuerungsabläufen erkannt und dem Motorsteuergerät sozusagen in Eigendiagnose zur Verfügung gestellt werden, wodurch insgesamt fehlerhafte Funktionen vermieden werden.

In Weiterbildung des erfindungsgemäßen Verfahrens ist demnach vorzugsweise vorgesehen, dass das gemessene Getriebeeingangsdrehmoment dem Motorsteuergerät mitgeteilt und auf seine Plausibilität und/oder Richtigkeit überprüft wird. Ein nicht plausibler Drehmomentwert ist beispielsweise ein solcher, der einen vorgegebenen maximalen Drehmomentwert überschreitet. Diese Überprüfung kann beispielsweise dadurch geschehen, dass das gemessene Getriebeeingangsdrehmoment mit einem berechneten Motordrehmoment verglichen wird. Bei unzulässig hohen Abweichungen zwischen diesen beiden Drehmomentwerten wird eine Notbetriebsart für das Automatgetriebe und/oder andere Antriebsstrangkomponenten und/oder Fahrzeuggeräte aktiviert. Diese Notbetriebsart wird zumindest die Steuergeräte des Fahrzeugantriebsmotors und/oder des Automatgetriebes betreffen, vorzugsweise können aber auch andere Fahrzeugsteuergeräte in einer diesbezüglichen Notbetriebsart betrieben werden. So kann in einem solchen Notbetrieb beispielsweise eine Klimaanlage abgeschaltet werden.

Bei einem derartigen Vergleich des gemessenen Getriebeeingangsdrehmoments mit dem berechneten Motordrehmoment, oder allein durch eine Analyse des zeitlichen Verlaufs des Getriebeeingangsdrehmoments, kann beispielsweise auf eine Unterbrechung der Kraftstoffzufuhr zu dem Fahrzeugantriebsmotor geschlossen werden. Als Folge dieser erkannten Fehlfunktion ist im Sinne der erwähnten Notbetriebsart vorgesehen, dass das Getriebesteuergerät bis zur Behebung dieser Fehlfunktion Übersetzungsänderungsvorgänge des Automatgetriebes unterbindet. Dadurch bleibt der Antriebsmotor in dem Antriebsstrang eingekoppelt, so dass beispielsweise eine Lenkhilfepumpe bis zum Fahrzeugstillstand hilfskrafterzeugend angetrieben wird. Ebenso kann ein Austausch von Steuerungssignalen mit dem Informationsinhalt einer Unterbrechung der Kraftstoffzufuhr zwischen Getriebesteuergerät und anderen Steuergeräten im Antriebsstrang, wie beispielsweise einem Motorsteuergerät oder einem Fahrzeugleitrechner, stattfinden, damit eine Notfahrstrategie für Unterbrechungen der Kraftstoffzufuhr aktiviert wird.

Selbstverständlich kann diese Analyse des zeitlichen Verlaufs des Getriebeeingangsdrehmoments auch in dem Getriebesteuergerät selbst durchgeführt werden.

Zudem kann vorgesehen sein, dass die Messwerte des Drehmomentsensors an der Getriebeeingangswelle dazu genutzt werden, um zusammen mit anderen Stellgrößen und Drehzahlen, wie beispielsweise dem Fahrpedalauslenkwinkel, der Getriebeeingangsdrehzahl und der Getriebeausgangsdrehzahl, den Fahrerwunsch hinsichtlich bestimmter Getriebeübersetzungsänderungsvorgänge auch in Notbetriebssituationen derart zu interpretieren, dass ein eingeschränkter aber sicherer Notfahrbetrieb möglich ist.

So kann als Notbetriebsart vorgesehen sein, dass nach dem Erkennen einer Fehlfunktion in einer Datenübertragungsstrecke der Steuergeräte, Bedienelementen und/oder Sensoren aus dem Signalverlauf des Drehmomentsensors an der Getriebeeingangswelle eine aus der Rücknahme der Fahrpedalauslenkung signalisierte Schaltabsicht (z.B. Rückschaltabsicht) des Fahrers erkannt und diese beispielsweise Rückschaltung des Getriebes durch Öffnen einer Schaltkupplung und Ausschalten der aktuellen Getriebeübersetzung sowie anschließendes Schließen der Schaltkupplung eingeleitet wird. Sodann wird aus dem Signalverlauf des Drehmomentsensors auf die durch die erneute Fahrpedalauslenkung vom Fahrer signalisierte gewünschte Motordrehzahl bzw. Getriebeeingangsdrehzahl für den bei der aktuellen Fahrgeschwindigkeit neuen niedrigeren Gang geschlossen, anschließend die Kupplung geöffnet, der neue zu dieser Fahrgeschwindigkeit und Fahrpedalauslenkung passende niedrigere Gang eingeschaltet und die Kupplung abschließend wieder geschlossen.

In weiterer Ausgestaltung der Erfindung kann vorgesehen sein, dass die Fehlfunktion dem Fahrer optisch und/oder akustisch mitgeteilt wird, damit dieser durch sein Fahrpedalauslenkverhalten gezielt das Gangschalten steuern bzw. begleiten kann.

Beispielhaft sei auf folgende Fahrbetriebssituation hingewiesen. Eine Signalschnittstelle bzw. eine Signalübertragungsstrecke zwischen dem Motorsteuergerät und dem Getriebesteuergerät ist ausgefallen. Der Fahrer wird über diese Tatsache und dessen Folgen optisch und/oder akustisch informiert. Während das Fahrzeug weiter fährt, erhöht sich der Fahrwiderstand durch eine Fahrbahnsteigung, so dass das anliegende Motordrehmoment nicht mehr ausreicht, um die von dem Fahrer durch die Fahrpedalauslenkung signalisierte Fahrleistung bzw. Fahrgeschwindigkeit zu halten. Eine Rückschaltung des Getriebes in einen niedrigeren Gag ist demnach erforderlich.

Der Fahrer erkennt die Rückschaltnotwenigkeit; er weiß aber auch, dass das Automatgetriebe wegen der fehlerhaften Verbindung zum Motorsteuergerät nicht mehr ordnungsgemäß selbsttätig schalten kann. Daher reduziert der Fahrer die Fahrpedalauslenkung, so dass das vom Antriebsmotor abgegebene Drehmoment verringert wird.

Aus dem gemessenen Drehmomentverlauf des Drehmomentsensors an der Getriebeeingangswelle erkennt das Getriebesteuergerät nun selbsttätig die Rückschaltabsicht des Fahrers, öffnet die Schaltkupplung, schaltet den aktuellen Gang aus und schließt sodann wieder die Kupplung. Anschließend stellt der Fahrer über die Auslenkung des Fahrpedals diejenige Motordrehzahl bzw. Getriebeeingangsdrehzahl ein, bei der sich in dem neuen und kleineren Getriebegang die vom Fahrer gewünschte Fahrgeschwindigkeit realisieren lässt. Schließlich wird die Kupplung erneut geöffnet, der neue kleinere Gang eingeschaltet und die Kupplung wieder geschlossen. Nun ist das Fahrzeug trotz der Unterbrechung der Kommunikationsmittel zwischen dem Motorsteuergerät und dem Getriebesteuergerät im neuen Gang fahrbar.

Ohne die Nutzung der Messwerte des Drehmomentsensors an der Getriebeeingangswelle würde die beschriebene Fahrzeugfehlfunktion dazu führen, dass das Fahrzeug im gerade geschalteten Gang bis zum Stillstand fährt und anschließend nicht mehr angefahren werden kann.

## Patentansprüche

1. Verfahren zum Feststellen von Fehlfunktionen von Komponenten eines Kraftfahrzeugantriebstranges sowie zur Reaktion auf dieselben, wobei der Antriebsstrang einen Antriebsmotor und ein Automatgetriebe mit jeweils zugeordneten Steuergeräten, Stellmitteln und Sensoren aufweist, und während eines Fahrzeugbetriebs die Funktionen der Steuergeräte, der Bedienelemente, der Sensoren und deren Datenübertragungsmittel erfaßt und auf Fehlfunktionsanzeichen überprüft werden und beim Auftreten einer Fehlfunktion eine Notbetriebsart aktiviert wird, **dadurch gekennzeichnet,**
**dass** ein Drehmomentsensor zur Erfassung eines Getriebeeingangsdrehmoments einer Getriebeeingangswelle zugeordnet ist und
**dass** während des Fahrzeugbetriebs die Funktionen der Steuergeräte, der Bedienelemente, der Sensoren und deren Datenübertragungsmittel sowie die Messwerte des Getriebeeingangsdrehmoments erfasst und auf Fehlfunktionsanzeichen überprüft werden und
**dass** das gemessene Getriebeeingangsdrehmoment dem Motorsteuergerät mitgeteilt und auf seine Plausibilität und/oder Richtigkeit überprüft wird und
**dass** nach dem Erkennen einer solchen Fehlfunktion Verfahrensschritte durchgeführt werden, mittels denen das Fahrzeug in der Notbetriebsart sicher weiter betreibbar ist oder mit deren Hilfe der Fahrbetrieb sicher beendet werden kann.

2. Verfahren nach Anspruch 1, **dadurch gekennzeichnet,**
**dass** das gemessene Getriebeeingangsdrehmoment mit einem berechneten Motordrehmoment verglichen wird, und dass bei unzulässig hohen Abweichungen zwischen diesen beiden Drehmomentwerten eine Notbetriebsart für das Automatgetriebe und/oder andere Antriebsstrangkomponenten und/oder Fahrzeuggeräte aktiviert wird.

3. Verfahren nach Anspruch 2, **dadurch gekennzeichnet,**
**dass** aus dem Vergleich des gemessenen Getriebeeingangsdrehmoments mit dem berechneten Motordrehmoment oder durch eine Analyse des gemessenen Drehmomentverlaufs an der Getriebeeingangswelle auf eine Unterbrechung der Kraftstoffzufuhr zu dem Fahrzeugantriebsmotor geschlossen wird.

4. Verfahren nach Anspruch 3, **dadurch gekennzeichnet,**
**dass** nach dem Feststellen der Unterbrechung der Kraftstoffzufuhr das Getriebesteuergerät ein Steuersignal mit diesem Informationsgehalt an andere Steuergeräte im Antriebsstrang abgibt, damit diese eine Notfahrstrategie für die Unterbrechung der Kraftstoffzufuhr aktivieren können.

5. Verfahren nach Anspruch 3, **dadurch gekennzeichnet,**
**dass** nach Feststellen der Unterbrechung der Kraftstoffzufuhr das Getriebesteuergerät bis zur Behebung der Fehlfunktion Übersetzungsänderungen im Getriebe unterbindet.

6. Verfahren nach Anspruch 3, **dadurch gekennzeichnet,**
**dass** nach dem Feststellen der Unterbrechung der Kraftstoffzufuhr ein Steuerungssignal von dem Motorsteuergerät oder einem Fahrzeugleitrechner an das Getriebesteuergerät abgegeben wird, welches bis zur Behebung der Fehlfunktion Übersetzungsänderungsvorgänge des Automatgetriebes unterbindet.

7. Verfahren nach Anspruch 1 oder 2, **dadurch gekennzeichnet,**
**dass** nach dem Erkennen einer Fehlfunktion in einer Datenübertragungsstrecke der Steuergeräte, Bedienelemente und/oder Sensoren aus dem Signalverlauf des Drehmomentsensors an der Getriebeeingangswelle eine durch die Rücknahme der Fahrpedalauslenkung signalisierte Schaltabsicht (z. B. Rückschaltabsicht) des Fahrers erkannt und diese Schaltung des
Getriebes durch Öffnen einer Schaltkupplung und Ausschalten der aktuellen Getriebeübersetzung sowie anschließendem Schließen der Schaltkupplung eingeleitet wird,
**dass** anschließend aus dem Signalverlauf des Drehmomentsensors auf die durch die erneute Fahrpedalauslenkung signalisierte gewünschte Motordrehzahl bzw. Getriebeeingangsdrehzahl für den bei der aktuellen Fahrgeschwindigkeit neuen niedrigeren Gang geschlossen wird und
**dass** anschließend der neue Gang eingeschaltet wird.

8. Verfahren nach Anspruch 7, **dadurch gekennzeichnet, dass** die Fehlfunktion dem Fahrer optisch und/oder akustisch mitgeteilt wird.

## Claims

1. Method for determining malfunctions of automotive driveline components as well as reactions to such malfunctions, with the driveline featuring a driving engine and an automatic transmission with control devices, actuators and sensors assigned to each of these units, and with the functions of the control devices, actuating elements, sensors and their means of data transmission being recorded and checked for signs of malfunction during driving operation, and with an emergency operating mode being activated when a malfunction occurs, **characterized in that** a torque sensor for the sensing of a transmission input torque is assigned to a transmission input shaft and that the functions of the control devices, the actuating elements, the sensors and their means of data transmission as well as the measured values of the transmission input torque are sensed and checked for signs of malfunction during driving operation and that the measured transmission input torque is communicated to the engine control unit and checked for its plausibility and/or correctness, and that process steps are implemented upon recognition of a malfunction by means of which continued safe operation of the vehicle in the emergency operating mode is possible, or operation can be safely ended.

2. Method according to claim 1, **characterized in that** the measured transmission input torque is compared with a calculated engine torque and that in the event of excessive deviations between these torque values, an emergency operating mode will be activated for the automatic transmission and/or other driveline components and/or vehicle installations.

3. Method according to claim 2, **characterized in that** interruption of the fuel supply to the automotive driving engine is inferred from a comparison of the measured transmission input torque with the calculated engine torque or from an analysis of the torque characteristic measured on the transmission input shaft.

4. Method according to claim 3, **characterized in that** upon determination of interruption of the fuel supply, the transmission control unit will send a control signal with this information to other control units in the driveline so that they can activate an emergency operating strategy for the interruption of fuel supply.

5. Method according to claim 3, **characterized in that** upon determination of interruption of the fuel supply, the transmission control unit will prevent any ratio change in the transmission until the malfunction has been remedied.

6. Method according to claim 3, **characterized in that** upon determination of the interruption of fuel supply, a control signal is sent by the engine control unit or a vehicle master computer to the transmission control device, which will prevent any ratio change of the automatic transmission until the malfunction has been remedied.

7. Method according to claim 1 or 2, **characterized in that** upon determination of a malfunction in a data transfer path of the control devices, actuating elements and/or sensors, a shifting intention of the driver (e.g. intended downshift) signaled by a released gas pedal is recognized on the basis of the signal curve of the torque sensor on the transmission input shaft, and that this gearshift is initiated through the opening of a shift clutch and deactivation of the current transmission ratio as well as subsequent closing of the shift clutch; that subsequently the desired engine speed or transmission input speed signalled by the repeated pedal activation for the new lower gear for the current driving speed is inferred from the signal curve of the torque sensor, and that subsequently this new gear is engaged.

8. Method according to claim 7, **characterized in that** the driver is optically and/or acoustically informed of the malfunction.

## Revendications

1. Procédé permettant la détection de dysfonctionnements de composants de la chaîne cinématique d'un véhicule automobile ainsi que la réaction à ces dysfonctionnements, sachant que la chaîne cinématique comporte un moteur d'entraînement et une boîte de vitesses automatique avec des boîtiers de commande, des actionneurs et des capteurs respectivement associés à ceux-ci, et permettant d'enregistrer pendant un fonctionnement du véhicule les fonctions des boîtiers de commande, des éléments de commande, des capteurs et de leurs moyens de transmission de données et de les contrôler pour relever des indices de dysfonctionnement et d'activer en cas de présence d'un dysfonctionnement un mode dégradé, **caractérisé en ce que** un capteur de couple pour l'enregistrement d'un couple d'entrée de la boîte de vitesses est attribué à un arbre d'entrée de la boîte de vitesses et **en ce que** pendant le fonctionnement du véhicule les fonctions des boîtiers de commande, des éléments de commande, des capteurs et de leurs moyens de transmission de données ainsi que les valeurs de couple d'entrée de la boîte de vitesses mesurées sont enregistrées et contrôlées pour relever des indices de dysfonctionnement et **en ce que** le couple d'entrée mesuré de la boîte de vitesses est communiqué au boîtier de commande du moteur et **en ce qu'**il est contrôlé par rapport à sa plausibilité et/ou pertinence et **en ce que** en cas de reconnaissance d'un tel dysfonctionnement sont effectuées des opérations à l'aide desquelles le véhicule peut être utilisé ultérieurement et de façon sûre en mode dégradé ou à l'aide desquelles le fonctionnement peut être arrêté de façon sûre.

2. Procédé selon la revendication 1, **caractérisé en ce que** le couple d'entrée mesuré de la boîte de vitesses est comparé à un couple moteur calculé, et **en ce que** en cas d'écarts inacceptables entre ces deux valeurs de couple est activé un mode dégradé pour la boîte automatique et/ou pour d'autres composants de la chaîne cinématique et/ou équipements du véhicule.

3. Procédé selon la revendication 2, **caractérisé en ce qu'**il est possible de conclure - à partir de la comparaison entre le couple d'entrée mesuré de la boîte de vitesses et le couple moteur calculé ou à l'aide d'une analyse de l'allure mesurée du couple au niveau de l'arbre d'entrée de la boîte de vitesses - à une interruption de l'alimentation en carburant du moteur d'entraînement du véhicule.

4. Procédé selon la revendication 3, **caractérisé en ce que** après la détection de l'interruption de l'alimentation en carburant le boîtier de commande de la boîte de vitesses transmet un signal de commande, ce signal contenant cette information, à d'autres boîtiers de commande dans la chaîne cinématique, afin que ceux-ci puissent activer une stratégie de mode dégradé pour l'interruption de l'alimentation en carburant.

5. Procédé selon la revendication 3, **caractérisé en ce que** après la détection de l'interruption de l'alimentation en carburant et jusqu'à l'élimination du dysfonctionnement le boîtier de commande de la boîte de vitesses inhibe toute variation du rapport de démultiplication de la boîte de vitesses.

6. Procédé selon la revendication 3, **caractérisé en ce que** après la détection de l'interruption de l'alimentation en carburant un signal de commande est transmis du boîtier de commande du moteur ou d'un boîtier de commande du véhicule au boîtier de commande de la boîte de vitesses, inhibant jusqu'à l'élimination du dysfonctionnement des opérations de modification du rapport de démultiplication de la boîte automatique.

7. Procédé selon la revendication 1 ou 2, **caractérisé en ce que** après la reconnaissance d'un dysfonctionnement sur une ligne de transmission de données des boîtiers de commande, éléments de commande et/ou capteurs est reconnue à partir de l'allure du signal du capteur de couple au niveau de l'arbre d'entrée de la boîte de vitesses une intention de changement de rapport du conducteur (par exemple intention de rétrogradage), cell-ci étant signalée par une réduction du degré d'enfoncement de la pédale d'accélérateur, et **en ce que** ce changement de rapport de la boîte de vitesses est déclenché par l'ouverture d'un embrayage et par la désactivation du rapport de démultiplication actuel de la boîte de vitesses ainsi qu'ensuite par la fermeture de l'embrayage,
**en ce que** ensuite à partir de l'allure du signal du capteur de couple il est possible de conclure au régime moteur ou au régime d'entrée de la boîte de vitesses pour le nouveau rapport inférieur correspondant à la vitesse de déplacement actuelle souhaité et signalé par une autre réduction du degré d'enfoncement de la pédale d'accélérateur et **en ce que** ensuite la nouvelle vitesse est engagée.

8. Procédé selon la revendication 7, **caractérisé en ce que** le dysfonctionnement est communiqué au conducteur par voie optique et/ou acoustique.
